# EUROPÄISCHE PATENTSCHRIFT

(11) **EP 1 013 970 B1**
(45) Veröffentlichungstag und Bekanntmachung des Hinweises auf die Patenterteilung: **16.03.2005**
(21) Anmeldenummer: 99123389.1
(22) Anmeldetag: 24.11.1999
(51) Int. Cl.: F16H 55/36, B60K 25/02, F16D 9/06

(54) **Vorrichtung zur Übertragung eines Drehmomentes von einem Verbrennungsmotor zu einem Kompressor**
Device for the transmission of torque from an internal combustion engine to a compressor
Dispositif pour la transmission de couple d'un moteur à combustion interne, à un compresseur

(30) Priorität: 24.12.1998 DE 19860150
(43) Veröffentlichungstag der Anmeldung: 28.06.2000
(73) Patentinhaber: Winkelmann Palsis Motortechnik GmbH& Co.KG, 59227 Ahlen (DE)
(72) Erfinder: Bevc, Jürgen, 59269 Beckum (DE); Schütte, Michael, 58642 Iserlohn (DE)
(74) Vertreter: Patentanwälte Meinke, Dabringhaus und Partner

(56) Entgegenhaltungen:
- EP-A- 0 254 295
- EP-A- 0 793 031
- EP-A- 0 867 631
- EP-A- 0 877 182

## Beschreibung

Die Erfindung betrifft eine Vorrichtung zur Übertragung eines Drehmomentes von einem Verbrennungsmotor zu einem Nebenaggregat, insbesondere dem Kompressor einer Klimaanlage eines Kraftfahrzeuges, mit einer Nabe zur Verbindung mit der Nebenaggregatwelle und einer drehbar auf dem Nebenaggregatgehäuse angeordneten Riemenscheibe, wobei die Riemenscheibe und die Nabe über ein Bauteil zur Schwingungsdämpfung und ein anderes Bauteil zur Überlastsicherung miteinander verbunden sind, wobei die Überlastsicherung derart ausgebildet ist, dass die Verbindung zwischen Riemenscheibe und Nabe bei Überschreiten eines vorgegebenen Drehmomentes unmittelbar und dauerhaft unterbrochen wird.

Bei mit einer Klimaanlage ausgerüsteten Kraftfahrzeugen wird üblicherweise der Kompressor der Klimaanlage über einen Riementrieb von der Kurbelwelle des Verbrennungsmotors angetrieben. Beim Ausfall des Kompressors der Klimaanlage hat dies zur Folge, dass der gesamte Antriebsstrang des Kraftfahrzeuges blockiert wird und das Fahrzeug nicht mehr fahrbereit ist. Um diesem Mangel abzuhelfen, ist aus EP 0 793 031 A1 eine Vorrichtung bekannt geworden, bei der zwischen der über einen Riementrieb mit der Kurbelwelle verbundenen Riemenscheibe des Kompressors und der Nabe der Kompressorwelle eine Einrichtung zur Schwingungsdämpfung und zur Überlastsicherung angeordnet ist, die gewährleisten soll, dass bei Überschreiten eines vorgegebenen Drehmomentes, nämlich des durch den Stillstand des Kompressors auftretenden Drehmomentes, die Kompressorwelle von der Riemenscheibe abgekoppelt wird, so dass die Riemenscheibe frei drehen kann und die Funktion des übrigen Antriebsstranges bei Ausfall des Kompressors nicht beeinträchtigt wird. Neben dieser Überlastsicherung dient die Einrichtung dieser bekannten Vorrichtung auch gleichzeitig zur Schwingungsdämpfung, um schädliche Schwingungen, die von der Kurbelwelle über den Riementrieb auf die Riemenscheibe übertragen werden, vom Kompressor bzw. der Kompressorwelle fernzuhalten. Dabei wird diese Einrichtung von einem elastischen Mitnehmerelement gebildet, das fest mit der Nabe der Kompressorwelle verbunden ist und außenseitig in gewisser Weise elastisch mit der Riemenscheibe verbunden ist, wobei die Elastizität dieses Mitnehmerelementes so bemessen ist, dass bei Auftreten eines vorgegebenen Drehmomentes dieses Mitnehmerelement durchrutscht und somit die Überlastsicherung gewährleistet.

Da dieses Mitnehmerelement sowohl zur Schwingungsdämpfung als auch zur Überlastsicherung dient, hat es sich in der Praxis als sehr schwierig herausgestellt, dieses Mitnehmerelement exakt so auszulegen, dass es sowohl die Schwingungsdämpfungsfunktion einwandfrei erfüllt als auch exakt bei Auftreten des vorgegebenen Drehmomentes die Überlastsicherung gewährleistet.

Eine weitere Vorrichtung ist aus DE 198 21 990 A1 bekannt, bei welcher die Riemenscheibe und die Nabe über zwei getrennte Bauteile miteinander verbunden sind, nämlich ein Bauteil zur Schwingungsdämpfung, welches von einem Gummiring gebildet ist, und ein Bauteil zur Überlastsicherung, das von einer gewundenen Feder gebildet ist, die auf der Antriebswelle montiert ist und so angeordnet und ausgebildet ist, dass sie bei Auftreten der Last verformt wird. Tritt der Überlastfall ein, so wird die Drehmomentübertragung von der Antriebswelle zur Riemenscheibe reversibel unterbrochen, solange die Überlast auftritt. Es ist jedoch schwierig, eine solche Feder exakt so auszulegen, dass sie bei Auftreten des vorgegebenen Drehmomentes die Überlastfunktion sicher gewährleistet. Ebenfalls schwierig ist die Auslegung des Gummiringes zur Schwingungsdämpfung, zumal der zur Verfügung stehende Bauraum für diesen Gummiring begrenzt ist. Eine ähnliche Vorrichtung ist aus EP 0 867 631 A1 bekannt.

Eine gattungsgemäße Vorrichtung mit den Merkmalen des Oberbegriffes des Anspruchs 1 ist aus JP 10252857 A bekannt. Bei dieser Vorrichtung ist gemäß Ausführungsform nach Fig. 6 die Riemenscheibe innenseitig mit einem sich im wesentlichen über der gesamten Breite der Riemenscheibe erstreckenden Gummiring als Dämpfer verbunden, der radial innenseitig an einem Drehmomentübertragungselement angeordnet ist, das axial außerhalb der Riemenscheibe mit axial erstreckten Zähnen versehen ist, die sich auf einem ringartigen Vorsprung des Elementes befinden. Auf der Welle ist ein Nabenbereich vorgesehen, der eine radiale Erstreckung aufweist. Am äußeren Umfang dieser radialen Erstreckung sind in axialer Richtung Zähne vorgesehen, die in die Zähne des Drehmomentübertragungselementes eingreifen. In dieser Eingriffsposition wird ein Drehmoment von der Riemenscheibe über den Gummiring auf das Element und vom Element über die formschlüssige Verbindung zwischen den Zähnen der radialen Erstreckung auf die Nabe übertragen. Ein den Nabenbereich und die radiale Erstreckung aufweisendes Element ist von einer Scheibenfeder federbeaufschlagt. Wenn ein vorbestimmtes Drehmoment überschritten wird, wird die Scheibenfeder deformiert, so dass die formschlüssige Verbindung zwischen den verzahnten Elementen sofort und dauerhaft unterbrochen wird. Während das Bauteil zur Überlastsicherung bei dieser Vorrichtung bereits verbessert ist, ist das Bauteil zur Schwingungsdämpfung verbesserungswürdig, da es relativ schwierig auszulegen ist und einen relativ großen Bauraum benötigt.

Aufgabe der Erfindung ist es, eine gattungsgemäße Vorrichtung so zu verbessern, dass bei Beibehaltung einer exakt ansprechenden Überlastsicherung die Schwingungsdämpfung verbessert wird.

Diese Aufgabe wird bei einer Vorrichtung der eingangs bezeichneten Art erfingdungsgemäß dadurch gelöst, dass die Riemenscheibe mit einer Mitnehmerscheibe verbunden ist, welche außenrandseitig mit umfänglich voneinander beabstandeten Mitnehmern versehen ist, wobei jeder Mitnehmer jeweils in einen jeweils durch radiale Rippen begrenzten Mitnehmerraum der Riemenscheibe eingreift, und wobei das Bauteil zur Schwingungsdämpfung von zwischen den Rändern des jeweiligen Mitnehmers und den zugeordneten Rippen der Riemenscheibe anliegenden Elastomerelementen gebildet ist.

Die Vorrichtung weist somit ebenfalls eine Entkopplung der beiden Funktionen auf, d.h. es ist ein Bauteil zur Schweingungsdämpfung und ein anderes davon getrenntes Bauteil zur Überlastsicherung vorgesehen, so dass beide Bauteile getrennt voneinander ausgelegt werden können. Das Bauteil zur Schwingungsdämpfung ist von einzelnen Elastomerelementen gebildet, die gezielt so ausgelegt werden können, dass die gewünschte Schwingungsdämpfung realisierbar ist. Diese Elastomerelemente sind platzsparend innerhalb eines durch radiale Rippen begrenzten Mitnehmerraumes der Riemenscheibe angeordnet, in die Mitnehmer einer Mitnehmerscheibe eingreifen, welche andererseits über das Bauteil zur überlastsicherung mit der Kompressorwelle in Verbindung steht.

Die Elastomerelemente können auf unterschiedliche Weise ausgebildet sein. So können sie vorteilhaft als gemeinsames Ringteil ausgebildet sein, was die Montage besonders vereinfacht. Sie können alternativ auch an die jeweiligen Rippen der Riemenscheibe oder an den jeweiligen Mitnehmer anvulkanisiert sein.

Ganz besonders vorteilhaft ist vorgesehen, dass die Elastomerelemente an den beiden radialen Enden eingewölbt ausgebildet und mittig mit einem Mittelloch versehen sind. Bei Druckbeanspruchung verformt sich das Mittelloch dann ellipsenartig und das nach außen ausweichende Gummi kann sich in die radialen Einwölbungen eindrücken und dadurch keine Reibung an der Riemenscheibe erfahren.

In weiterer vorteilhafter Ausgestaltung ist vorgesehen, dass das Bauteil zur Überlastsicherung von der Mitnehmerscheibe gebildet ist, die an der Nabe form- und/oder kraftschlüssig derart drehfest gehalten ist, dass die Verbindung bei einem bestimmten vorgegebenen Drehmoment aufgehoben wird. Der Formund/oder Kraftschluss kann dabei auf unterschiedliche Weise realisiert werden.

Ganz besonders bevorzugt ist vorgesehen, dass die form- und/oder kraftschlüssige Verbindung zwischen der Mitnehmerscheibe und der Nabe von einer keilwellenartigen Profilierung mit zakkenförmigen Keilen gebildet ist. Dabei ist dann die form- und/oder kraftschlüssige Verbindung so ausgelegt, dass bei Überschreiten eines vorgegebenen Drehmomentes, welches durch den Stillstand der Kompressorwelle auftritt, die keilwellenartige Profilierung frei durchrutschen kann, so dass die Drehmomentübertragung zwischen Nabe und Mitnehmerscheibe aufgehoben ist.

Vorzugsweise besteht die Mitnehmerscheibe aus Kunststoff, während die Nabe z.B. aus einem Sintermetall besteht. Durch geeignete Wahl des Kunststoffes und der Profilierung kann dann abhängig von der durch den Stillstand des Kompressors verursachten Blockierdrehmomentes eine exakte Auslegung erfolgen, so dass die Überlastsicherung genau dann wirksam wird; wenn der Kompressor still steht.

Die Erfindung ist nachstehend anhand der Zeichnung beispielsweise näher erläutert. Diese zeigt in
- Fig. 1: einen Schnitt durch eine erfindungsgemäße Vorrichtung gemäß Linie I-I in Fig. 2,
- Fig. 2: eine Seitenansicht der in Fig. 1 dargestellten Vorrichtung,
- Fig. 3: im Längsschnitt die Einrichtung zur Überlastsicherung der Vorrichtung,
- Fig. 4: eine Seitenansicht der Fig. 3,
- Fig. 5: einen Schnitt gemäß der Linie A - A in Fig. 3,
- Fig. 6: eine in Fig. 5 mit Z bezeichnete vergrößerte Einzelheit und in

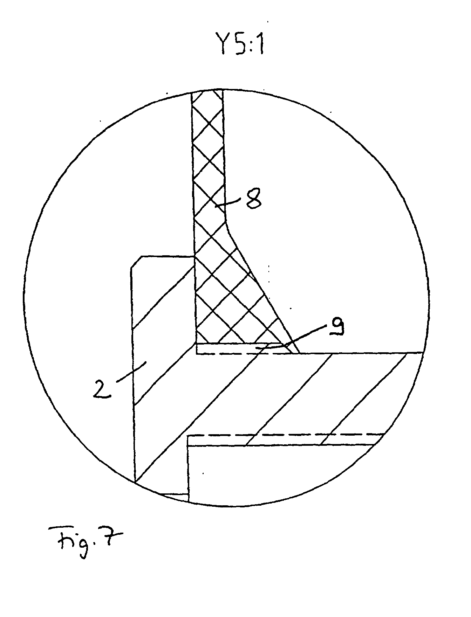

- Fig. 7: eine in Fig. 3 mit Y bezeichnete vergrößerte Einzelheit.

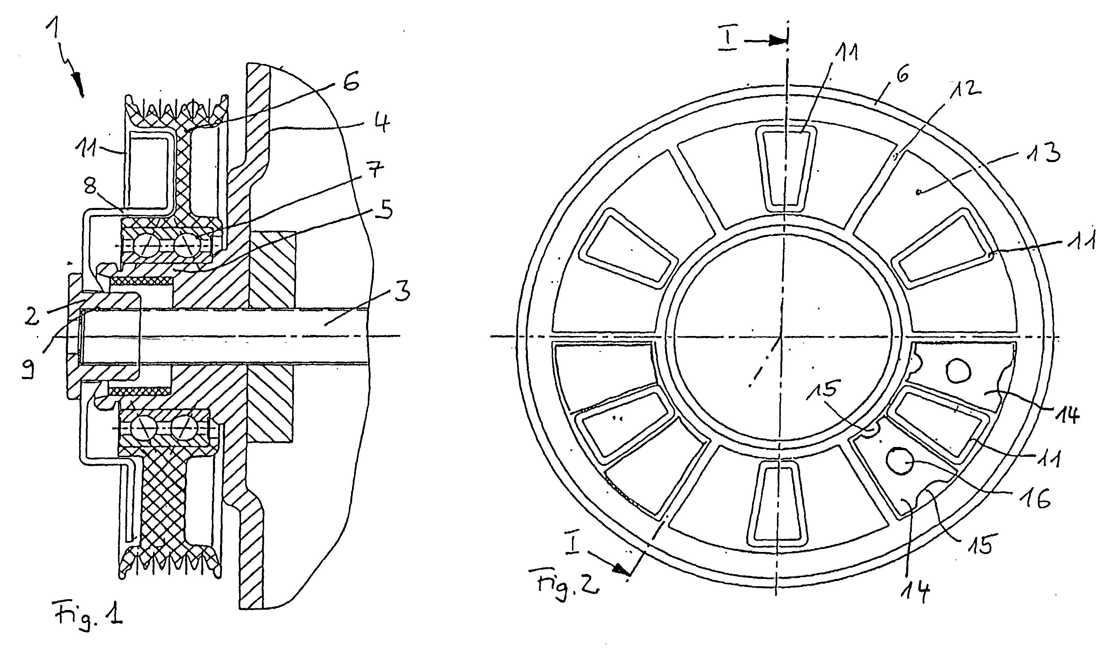

Eine erfindungsgemäße Vorrichtung zur Übertragung eines Drehmomentes von einem nicht dargestellten Verbrennungsmotor zu einem Kompressor ist in Figur 1 allgemein mit 1 bezeichnet. Diese Vorrichtung 1 weist zunächst eine Nabe 2 auf, welche zur drehfesten Verbindung mit einer Kompressorwelle 3 eines Kompressors einer Klimaanlage oder dergl. dient. Das Kompressorgehäuse 4 dieses Kompressors ist in Figur 1 nur angedeutet. Auf einem zapfenförmigen Ansatz 5 des Kompressorgehäuses 4 ist eine Riemenscheibe 6, hier eine Poly-V-Riemenscheibe, drehbar gelagert, wozu ein Lager 7 vorgesehen ist.

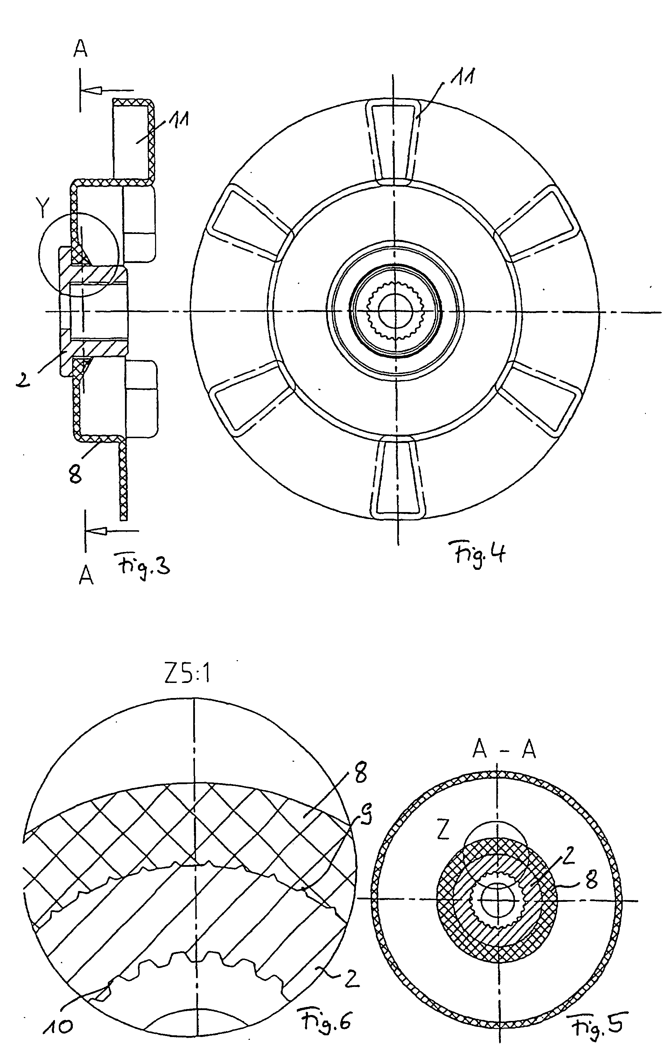

Die Riemenscheibe 6 ist über einen nicht dargestellten Poly-V-Riemen vorzugsweise mit der Kurbelwelle eines Verbrennungsmotors eines Kraftfahrzeuges verbunden und wird somit von dieser angetrieben. Die Riemenscheibe 6 dient dazu, die Kompressorwelle 3 und damit den Kompressor anzutreiben. Um dies zu bewerkstelligen, ist zwischen der Riemenscheibe 6 und der Nabe 2 eine Einrichtung zur Schwingungsdämpfung und zur Überlastsicherung vorgesehen, die von zwei getrennten Bauteilen gebildet ist. Das Bauteil zur Überlastsicherung ist von einer Mitnehmerscheibe 8 gebildet, die form- und/oder kraftschlüssig an der Nabe 2 angeordnet ist. Die form- und/oder kraftschlüssige Verbindung zwischen der Mitnehmerscheibe 8 und der Nabe 2 wird dabei vorzugsweise von einer keilwellenartigen Profilierung 9 mit zackenförmigen Keilen gebildet, wie am besten aus Figur 6 hervorgeht. Dieser Figur ist auch zu entnehmen, daß die Nabe 2 vorzugsweise über ein herkömmliches Keilwellenprofil 10 an der Kompressorwelle 3 angeordnet ist.

Vorzugsweise besteht die Mitnehmerscheibe 8 aus Kunststoff und die Nabe 3 vorzugsweise aus einem geeigneten Metall, so daß durch entsprechende Materialauswahl und geeignete geometrische Gestaltung der keilwellenartigen Profilierung 9 die Überlastsicherung gezielt so ausgelegt werden kann, daß dann, wenn die Kompressorwelle durch Störung des Kompressors stillsteht und somit ein entsprechendes Drehmoment auftritt, die Mitnehmerscheibe 8 frei und irreversibel auf der Nabe 3 "durchrutscht", d.h., wenn der Überlastfall eintritt, wird die Verbindung zwischen der Nabe 3 und der Mitnehmerscheibe 8 unmittelbar und dauerhaft beendet.

Die Mitnehmerscheibe 8 ist außenrandseitig mit umfänglich voneinander beabstandeten Mitnehmern 11 versehen, wobei jeder Mitnehmer 11 jeweils in einen jeweils durch radiale Rippen 12 begrenzten Mitnehmerraum 13 der Riemenscheibe 6 eingreift. Zur Schwingungsdämpfung sind zwischen den Rändern des jeweiligen Mitnehmers 11 und den zugeordneten Rippen 12 der Riemenscheibe 6 Elastomerelemente 14 vorgesehen, die die Schwingungsdämpfung gewährleisten. Bei Drehung der Riemenscheibe 6 durch Antrieb über den nicht dargestellten Riementrieb von der Kurbelwelle des Verbrennungsmotors wird somit die Drehbewegung der Riemenscheibe 6 über die Mitnehmer 11 und die Elastomerelemente 14, die entsprechend dann an den Rippen 12 dämpfend anliegen, auf die Nabe 2 übertragen, solange nicht die Überlastsicherung zwischen der Mitnehmerscheibe 8 und der Nabe 2 wirksam wird, wenn die Kompressorwelle 3 in einem Schadensfalle stillsteht.

Wie am besten aus Figur 2 hervorgeht, ist vorzugsweise das jeweilige Elastomerelement 14 an den beiden radialen Enden halbkreisförmig eingewölbt, diese Einwölbungen sind mit 15 bezeichnet. Außerdem ist jedes Elastomerelement 14 mit einem Mittelloch 16 versehen. Dies bietet den Vorteil, daß bei der Mitnahmebewegung sich das Mittelloch 16 elliptisch verformt und dabei die Außenränder des Elastomerelementes 14 sich in die halbkreisförmigen Einwölbungen 15 verformen können, ohne unter Reibung an der Riemenscheibe 6 anzuliegen.

Die Elastomerelemente 14 können ein gemeinsames Ringelement bilden, sie können auch an die Rippen 12 der Riemenscheibe 6 oder an die Mitnehmer 11 anvulkanisiert sein, sie können aber auch, wie in Figur 2 dargestellt, als Einzelteil ausgebildet sein.

Natürlich ist die Erfindung nicht auf das dargestellte Ausführungsbeispiel beschränkt. Weitere Ausgestaltungen sind möglich, ohne den Grundgedanken zu verlassen. So kann insbesondere die form- und/oder kraftschlüssige Verbindung zwischen der Nabe 2 und der Mitnehmerscheibe 8 auch auf andere Weise realisiert werden, wesentlich ist, daß eine Trennung der Überlastsicherung und der Schwingungsdämpfung durch getrennte Bauteile gewährleistet ist.

## Patentansprüche

1. Vorrichtung zur Übertragung eines Drehmomentes von einem Verbrennungsmotor zu einem Nebenaggregat, insbesondere dem Kompressor einer Klimaanlage eines Kraftfahrzeuges, mit einer Nabe zur Verbindung mit der Nebenaggregatwelle und einer drehbar auf dem Nebenaggregatgehäuse angeordneten Riemenscheibe, wobei die Riemenscheibe und die Nabe über ein Bauteil zur Schwingungsdämpfung und ein anderes Bauteil zur Überlastsicherung miteinander verbunden sind, wobei die Überlastsicherung derart ausgebildet ist, dass die Verbindung zwischen Riemenscheibe und Nabe bei Überschreiten eines vorgegebenen Drehmomentes unmittelbar und dauerhaft unterbrochen wird,
**dadurch gekennzeichnet,**
**dass** die Riemenscheibe (6) mit einer Mitnehmerscheibe (8) verbunden ist, welche außenrandseitig mit umfänglich voneinander beabstandeten Mitnehmern (11) versehen ist, wobei jeder Mitnehmer (11) jeweils in einen jeweils durch radiale Rippen (12) begrenzten Mitnehmerraum (13) der Riemenscheibe (6) eingreift, und wobei das Bauteil zur Schwingungsdämpfung von zwischen den Rändern des jeweiligen Mitnehmers (11) und den zugeordneten Rippen (12) der Riemenscheibe (6) anliegenden Elastomerelementen (14) gebildet ist.

2. Vorrichtung nach Anspruch 1,
**dadurch gekennzeichnet,**
**dass** sämtliche Elastomerelemente (14) als gemeinsames Ringteil ausgebildet sind.

3. Vorrichtung nach Anspruch 1,
**dadurch gekennzeichnet,**
**dass** die Elastomerelemente (14) an die jeweiligen Rippen (12) der Riemenscheibe anvulkanisiert sind.

4. Vorrichtung nach Anspruch 1,
**dadurch gekennzeichnet,**
**dass** die jeweiligen Elastomerelemente (14) an den jeweiligen Mitnehmer (11) anvulkanisiert sind.

5. Vorrichtung nach Anspruch 1 oder einem der folgenden,
**dadurch gekennzeichnet,**
**dass** die Elastomerelemente (14) an den beiden radialen Enden eingewölbt ausgebildet und mittig mit einem Mittelloch (16) versehen sind.

6. Vorrichtung nach Anspruch 1 oder einem der folgenden,
**dadurch gekennzeichnet,**
**dass** das Bauteil zur Überlastsicherung von der Mitnehmerscheibe (8) gebildet ist, die an der Nabe (2) form- und/oder kraftschlüssig derart drehfest gehalten ist, dass die Verbindung bei einem bestimmten vorgegebenen Drehmoment aufgehoben wird.

7. Vorrichtung nach Anspruch 6,
**dadurch gekennzeichnet,**
**dass** die form- und/oder kraftschlüssige Verbindung zwischen der Mitnehmerscheibe (8) und der Nabe (2) von einer keilwellenartigen Profilierung (9) mit zackenförmigen Keilen gebildet ist.

8. Vorrichtung nach Anspruch 1 oder einem der folgenden,
**dadurch gekennzeichnet,**
**dass** die Mitnehmerscheibe (8) aus Kunststoff besteht.

## Claims

1. Apparatus for the transmission of a torque from an internal combustion engine to an ancillary assembly, in particular the compressor of an air conditioning installation of a motor vehicle, comprising a hub for connection to the ancillary assembly shaft and a belt pulley arranged rotatably on the ancillary assembly housing, wherein the belt pulley and the hub are connected together by way of a component for vibration damping and another component for overload protection, wherein the overload protection is such that the connection between the belt pulley and the hub is immediately and permanently interrupted when a predetermined torque is exceeded,
**characterised in that**
the belt pulley (6) is connected to an entrainment disc (8) which is provided at its outside edge with peripherally mutually spaced entrainment portions (11), wherein each entrainment portion (11) respectively engages into an entrainment space (13) respectively delimited by radial ribs (12) on the belt pulley (6), and wherein the component for vibration damping is formed by elastomer elements (14) which bear between the edges of the respective entrainment portion (11) and the associated ribs (12) of the belt pulley (6).

2. Apparatus according to claim 1 **characterised in that** all elastomer elements (14) are in the form of a common annular portion.

3. Apparatus according to claim 1 **characterised in that** the elastomer elements (14) are vulcanised to the respective ribs (12) of the belt pulley.

4. Apparatus according to claim 1 **characterised in that** the elastomer elements (14) are vulcanised to the respective entrainment portion (11).

5. Apparatus according to claim 1 or one of the following claims **characterised in that** the elastomer elements (14) are of an inwardly curved configuration at the two radial ends and are provided centrally with a central hole (16).

6. Apparatus according to claim 1 or one of the following claims **characterised in that** the component for overload protection is formed by the entrainment disc (8) which is held non-rotatably to the hub (2) in positively locking and/or force-locking relationship in such a way that the connection is released at a given predetermined torque.

7. Apparatus according to claim 6 **characterised in that** the positively locking and/or force-locking connection between the entrainment disc (8) and the hub (2) is formed by a splined shaft-like profiling (9) with toothed splines.

8. Apparatus according to claim 1 or one of the following claims **characterised in that** the entrainment disc (8) comprises plastic material.

## Revendications

1. Dispositif pour transmettre un couple de rotation depuis un moteur à combustion interne vers un ensemble accessoire, en particulier le compresseur d'une installation de climatisation d'un véhicule automobile, comprenant un moyeu destiné à être relié à l'arbre de l'ensemble accessoire et une poulie à gorge agencée en rotation sur le carter du groupe accessoire, la poulie à gorge et le moyeu étant reliés l'un à l'autre via un composant destiné à l'amortissement de vibrations et un autre composant destiné à la sécurité anti-surcharge, ledit composant anti-surcharge étant ainsi réalisé que la jonction entre la poulie à gorge et le moyeu est interrompue immédiatement et durablement lors du dépassement d'un couple de rotation prédéterminé,
**caractérisé en ce que**
la poulie à gorge (6) est reliée à un disque d'entraînement (8) qui est pourvu, du côté de sa bordure extérieure, de tocs d'entraînement (11) écartés les uns des autres en sens périphérique,
chaque toc d'entraînement (11) s'engage dans un logement d'entraînement respectif (13), délimité par des nervures radiales respectives (12), dans la poulie à gorge (6), et
le composant destiné à l'amortissement des vibrations est formé par des éléments élastomères (14) agencés entre les bordures du toc d'entraînement respectif (11) et les nervures associées (12) de la poulie à gorge (6).

2. Dispositif selon la revendication 1, **caractérisé en ce que** la totalité des éléments élastomères (14) sont réalisés sous forme de composant annulaire commun.

3. Dispositif selon la revendication 1, **caractérisé en ce que** les éléments élastomères (14) sont fixés par vulcanisation sur les nervures respectives (12) de la poulie à gorge.

4. Dispositif selon la revendication 1, **caractérisé en ce que** les éléments élastomères respectifs (14) sont fixés par vulcanisation sur le toc d'entraînement respectif (11).

5. Dispositif selon la revendication 1 ou l'une des suivantes, **caractérisé en ce que** les éléments élastomères (14) sont réalisés sous forme concave aux deux extrémités radiales, et sont dotés d'un trou central (16) au milieu.

6. Dispositif selon la revendication 1 ou l'une des suivantes, **caractérisé en ce que** le composant destiné à la sécurité anti-surcharge est réalisé par la poulie d'entraînement (8), laquelle est maintenue solidaire en rotation sur le moyeu (2), par coopération de formes et/ou de forces de telle façon que la liaison est annulée pour un couple de rotation prédéterminé donné.

7. Dispositif selon la revendication 6, **caractérisé en ce que** la liaison par coopération de formes et/ou de forces entre le disque d'entraînement (8) et le moyeu (2) est formée par un profil (9) en forme d'ondulations en coin, avec des coins en forme de dents.

8. Dispositif selon la revendication 1 ou l'une des suivantes, **caractérisé en ce que** le disque d'entraînement (8) est en matière synthétique.
